# EUROPEAN PATENT APPLICATION

(11) **EP 4 043 885 A1**
(43) Date of publication of application: **17.08.2022**
(21) Application number: 20873533.2
(22) Date of filing: 10.09.2020
(51) Int. Cl.: G01N 35/00, G01N 35/02, G01N 35/10

(54) **AUTOMATIC ANALYSIS DEVICE**

(30) Priority: 09.10.2019 JP 2019185620
(71) Applicant: Hitachi High-Tech Corporation, Minato-ku Tokyo 105-6409 (JP)
(72) Inventor: SAITO, Yoshiaki, Tokyo 105-6409 (JP); SUGINO, Miyuki, Tokyo 105-6409 (JP)
(74) Representative: MERH-IP Matias Erny Reichl Hoffmann Patentanwälte PartG mbB
(86) International application number: PCT/JP2020/034242
(87) International publication number: WO 2021/070546

(57) **Abstract**

Provided is an automatic analyzer capable of further reducing carryover between specimens.

The automatic analyzer includes a first dispensing unit for dispensing a specimen related to a first analysis item group having a high possibility of carryover, a second dispensing unit for dispensing a specimen related to a second analysis item group having a low possibility of carryover, an input unit for receiving an input of analysis information related to a plurality of analysis items for a specimen, a classification unit for classifying the analysis information into the first analysis item group and the second analysis item group, and a determination unit for determining a dispensing sequence for each specimen for the first analysis item group and determining a dispensing sequence for each analysis item for the second analysis item group.

## Description

### Technical Field

The present invention relates to an automatic analyzer.

### Background Art

In an automatic analyzer, in order to reduce the influence of specimen carryover (hereinafter, referred to as carryover) in analysis between specimens, there is a technology that classifies biochemistry and immunity within the same specimen and dispenses the analysis items of biochemistry first (refer to JP-A-2010-025587 (PTL 1)).

### Citation List

### Patent Literature

PTL 1: JP-A-2010-025587

### Summary of Invention

### Technical Problem

According to the above-described PTL 1, since only the determination of a dispensing sequence for each specimen is considered, there is a problem that the reduction of carryover between specimens is insufficient.

Therefore, an object of the present invention is to provide an automatic analyzer capable of further reducing carryover between specimens.

### Solution to Problem

According to an aspect of the present invention, there is provided an automatic analyzer including a first dispensing unit for dispensing a specimen related to a first analysis item group having a high possibility of carryover, a second dispensing unit for dispensing a specimen related to a second analysis item group having a low possibility of carryover, an input unit for receiving an input of analysis information related to a plurality of analysis items for the specimen, a classification unit for classifying the analysis information into the first analysis item group and the second analysis item group, and a determination unit for determining a dispensing sequence for each specimen for the first analysis item group and determining a dispensing sequence for each analysis item for the second analysis item group.

### Advantageous Effects of Invention

According to the present invention, it is possible to provide an automatic analyzer capable of further reducing carryover between specimens.

### Brief Description of Drawings

[Fig. 1] Fig. 1 is a diagram showing the entire configuration of an automatic analyzer.
[Fig. 2] Fig. 2 is a diagram showing a relationship between a device cycle and a dispensing cycle.
[Fig. 3] Fig. 3 is a flowchart for determining the dispensing sequence.
[Fig. 4A] Fig. 4A is a diagram showing Table 1.
[Fig. 4B] Fig. 4B is a diagram showing Table 2.
[Fig. 5A] Fig. 5A is a diagram showing a case where dispensing is performed according to an analysis request.
[Fig. 5B] Fig. 5B is a diagram showing a case where all specimens are dispensed in descending order of the reaction time.
[Fig. 6A] Fig. 6A is a timing chart for illustrating problems of the embodiment corresponding to Fig. 5A.
[Fig. 6B] Fig. 6B is a timing chart for illustrating problems of the embodiment corresponding to Fig. 5B.
[Fig. 7A] Fig. 7A is a diagram showing a dispensing sequence corresponding to S304 of Example 1.
[Fig. 7B] Fig. 7B is a timing chart corresponding to S304 of Example 1.
[Fig. 8A] Fig. 8A is a diagram showing a dispensing sequence corresponding to S305 of Example 1.
[Fig. 8B] Fig. 8B is a timing chart corresponding to S305 of Example 1.
[Fig. 9] Fig. 9 is a flowchart of Example 2.
[Fig. 10A] Fig. 10A is a diagram showing Table 5.
[Fig. 10B] Fig. 10B is a diagram showing an analysis sequence of Example 2.
[Fig. 11] Fig. 11 is a timing chart of Example 2.
[Fig. 12] Fig. 12 is a flowchart for determining a dispensing sequence in Example 3.
[Fig. 13A] Fig. 13A is a diagram showing Table 8.
[Fig. 13B] Fig. 13B is a view showing Table 9.
[Fig. 14A] Fig. 14A is a diagram showing an example in which the analysis sequence is rearranged for only a second analysis item group.
[Fig. 14B] Fig. 14B is a diagram showing an example in which the dispensing sequence is rearranged based on one specimen analysis time for a first analysis item group.

### Description of Embodiments

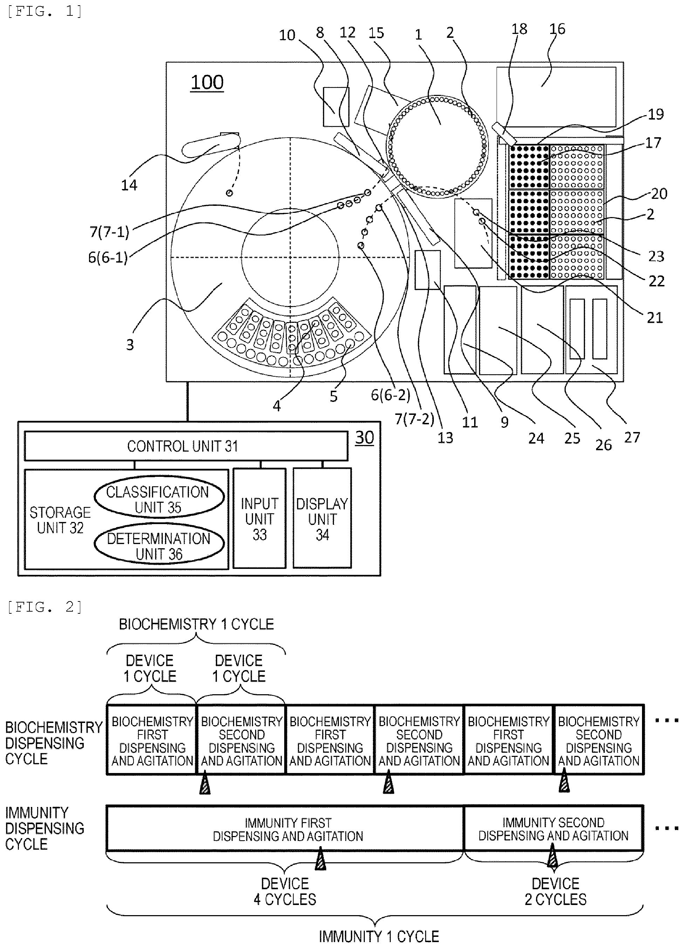

Fig. 1 is a diagram showing the entire configuration of an automatic analyzer. The automatic analyzer 100 is a complex automatic analyzer that analyzes a plurality of analysis item groups (biochemistry, immunity) with one unit. In order to reduce the size of the device, a predetermined mechanism is shared by a plurality of analysis item groups.

The automatic analyzer 100 includes an incubator 1, a reaction vessel 2, a common disk 3 for holding a reagent and a specimen in common, a reagent vessel 4, a specimen vessel 5, a first dispensing unit 8 for dispensing the specimen and the reagent for biochemistry using a first nozzle, a second dispensing unit 9 for dispensing the specimen and the reagent for immunity using a second nozzle, a first pump 10 that enables the rotation and vertical movement of the first dispensing unit 8, a second pump 11 that enables the rotation and vertical movement of the second dispensing unit 9, a first cleaning tank 12 for cleaning the first nozzle, the second cleaning tank 13 for cleaning the second nozzle, a reagent agitating unit 14, a spectrophotometer 15, a detection unit 16 such as a flow cell, a tip 17 used when dispensing a liquid for immunity, a transport unit 18 for transporting the tip 17 or the reaction vessel 2, a tray 19 for the tip 17, a tray 20 for the reaction vessel 2, a disposal box 21 for storing used tip 17 and reaction vessel 2, a mounting position 22 of the tip 17, a disposal position 23 of the tip 17, a waste tank 24 for storing the used liquid, a water supply tank 25 for biochemical measurement, a water supply tank 26 for immunoassay, a cleaning liquid container 27 for storing cleaning liquid, and a control device 30 for performing various controls of the automatic analyzer 100.

The incubator 1 holds the reaction vessel 2 for storing a mixed solution of the specimen and the reagent on the circumference thereof, and keeps the reaction vessel 2 at a constant temperature in order to promote the reaction of the mixed solution. The incubator 1 is controlled by a drive mechanism such as a motor to be rotated and driven by a distance corresponding to a predetermined number of reaction vessels 2 in one cycle.

The reaction vessel 2 is a vessel having common specifications for all reactions, and is disposable. Regarding the installation positions of the reaction vessels 2, the reaction vessels 2 are arranged alternately on the circumference, such that, for example, the vessels for biochemical analysis are at the odd-numbered positions and the vessels for immunoassay are at the even-numbered positions.

On the common disk 3, a plurality of reagent vessels 4 and specimen vessels 5 are placed on the circumference. Here, an example in which the reagent vessels 4 are arranged on the inner circumference of the specimen vessels 5 is shown, but the specimen vessels 5 may be arranged on the inner circumference of the reagent vessels 4, and may be arranged without distinguishing the inner circumference and the outer circumference from each other.

The first dispensing unit 8 performs reagent dispensing and specimen dispensing from the reagent vessel 4 and the specimen vessel 5 to the reaction vessel 2 while drawing an arc around the rotation axis. On the path of the first dispensing unit 8, there are a specimen aspiration position 7-1 and a reagent aspiration position 6-1 on the common disk 3, a first dispensing position and a second dispensing position on the incubator 1, and the first cleaning tank 12. Meanwhile, the second dispensing unit 9 performs reagent dispensing and specimen dispensing from the reagent vessel 4 and the specimen vessel 5 to the reaction vessel 2 while drawing an arc around the rotation axis. On the path of the second dispensing unit 9, there are a specimen aspiration position 7-2 and a reagent aspiration position 6-2 on the common disk 3, a third dispensing position and a fourth dispensing position on the incubator 1, and the second cleaning tank 13. Furthermore, in a case of immunoassay, precise measurement is required and it is highly necessary to prevent carryover between specimens. Therefore, the second dispensing unit 9 performs dispensing using the tip 17. Accordingly, there are the mounting position 22 and the disposal position 23 on the path of the second dispensing unit 9. Meanwhile, in a case of biochemical analysis, since precision is not required as much as in immunoassay, the first dispensing unit 8 performs dispensing while cleaning the first nozzle in the first cleaning tank 12 each time dispensing is performed without using the tip 17.

The first dispensing unit 8 and the second dispensing unit 9 are arranged such that the paths of the first nozzle and the second nozzle and the respective mechanisms thereof do not physically interfere with each other. The first dispensing unit 8 and the second dispensing unit 9 aspirate the specimen and the reagent, and then agitate and mix the specimen and the reagent in the reaction vessel 2 by an aspiration/discharge operation. For the specimen used for both biochemical and immunological analysis, both the first dispensing unit 8 and the second dispensing unit 9 access the specimen.

The spectrophotometer 15 arranged around the incubator 1 is used for biochemical analysis. The spectrophotometer 15 is provided with a light source or a detector (not shown), and measures the absorbance of the reaction solution by spectroscopically detecting the transmitted light obtained by irradiating the reaction solution in the reaction vessel 2 with light.

The detection unit 16 is used for immunoassay. The reaction solution of which reaction is promoted by the incubator 1 is sent to the detection unit 16 and analyzed by electrochemical luminescence or chemiluminescence. Reagents or labeling substances suitable for each case and the structure and physical properties of the detection region are selected, and the detector (for example, a photomultiplier tube) measures the amount of luminescence derived from the luminescence reaction of the labeling substance.

The transport unit 18 transports the reaction vessel 2, of which the measurement of absorbance is completed in the incubator 1, to the disposal box 21, and disposes of the reaction vessel 2. Further, the transport unit 18 transports the reaction vessel 2 containing the reaction solution, of which reaction has been promoted by the incubator 1, to the detection unit 16. Furthermore, the transport unit 18 transports the reaction vessel 2 analyzed by the detection unit 16 to the disposal box 21, and disposes of the reaction vessel 2.

The control device 30 is connected to each mechanism of the automatic analyzer 100 (the connection is not shown), and includes a control unit 31, a storage unit 32, an input unit 33, and a display unit 34. The control unit 31 controls the first dispensing unit 8 and the second dispensing unit 9 to perform dispensing in parallel, as well as the rotation drive of the incubator 1, the rotation operation of the common disk 3, the nozzle drive, the specimen aspiration and discharge, and the like. The storage unit 32 stores programs or various data of the classification unit 35 or the determination unit 36, which will be described later. The input unit 33 receives an instruction from the user. The display unit (display) 34 displays the result or the like obtained from the analysis result to the user. The input unit 33 and the display unit 34 may be integrated as a user interface. The control unit 31 reads and executes a program of the classification unit 35 or the determination unit 36 from the storage unit 32 to realize the embodiment, which will be described later. Furthermore, the classification unit 35 or the determination unit 36 may be realized by hardware.

Fig. 2 is a diagram showing a relationship between a device cycle and a dispensing cycle. In this embodiment, the device cycle is 10 seconds, and one biochemical cycle is two device cycles. In the first half-cycle of the two cycles, the first reagent and the specimen are dispensed and agitated in the reaction vessel 2 (first biochemical dispensing and agitation), and in the second half-cycle of the two cycles, the second reagent is dispensed and agitated in the reaction vessel 2 (second biochemical dispensing and agitation). Further, the reaction vessel 2 is installed and taken out of the incubator 1 in the second half-cycle.

One cycle of immunity is six device cycles. The reaction vessel 2 for immunity is installed in the incubator 1 in the first cycle of the device cycle and is taken out in the third cycle. The first dispensing is performed in the fourth cycle of the device cycle, and the second dispensing is performed in the sixth cycle. The time for the first dispensing is the time from the first to fourth cycles of the device cycle, but the time from the first to third cycles is used for mounting the tip and aspirating reagents and specimens. At this time, the first dispensing unit 8 for biochemistry also aspirates reagents and specimens, the reagents for biochemistry and immunity are mounted on the common disk 3, and thus the timings at which the first dispensing unit 8 and the second dispensing unit 9 perform the aspiration operation are controlled so as not to overlap each other.

The Δ mark in Fig. 2 indicates the timing of specimen dispensing. When the biochemical analysis items and the immunological analysis items coexist for one specimen, both the first nozzle for biochemistry and the second nozzle for immunity access one specimen vessel. However, since the Δ marks do not overlap each other between biochemistry and immunity, the first nozzle and the second nozzle do not interfere with each other.

Here, in JP-A-2010-025587 (PTL 1), analysis items are classified into biological analysis items and immunological analysis items in the same specimen, and dispensing is performed for biochemistry first before for immunity. Since the nozzle is cleaned each time dispensing is performed for one analysis item, when there are a plurality of biochemical analysis items, the nozzles are cleaned as the same number as the plurality of biochemical analysis items, and then the process moves to the dispensing for immunity. In other words, there is almost no influence of the previous specimen, and there is an effect that carryover that causes an analysis error can be reduced. Meanwhile, for a certain specimen, when there are a plurality of analysis items for biochemistry, the above-described effects can be obtained, but when there is only one biological analysis item (the number of items is small) or when there are only immunological analysis items, the dispensing for immunity is performed with the same nozzle immediately after the dispensing of the previous specimen. Therefore, there is also a problem that the possibility of causing carryover increases. Furthermore, in JP-A-2010-025587 (PTL 1), the dispensing related to biochemistry and immunity is performed using the same specimen dispensing unit. Therefore, it is also noted that the assumption in PTL 1 is different from that in this automatic analyzer that uses the specimen dispensing unit for biochemistry and the specimen dispensing unit for immunity separately.

Further, in WO2017/138285, for the purpose of shortening the analysis time, the dispensing is performed in descending order of the reaction time of the analysis items. However, when performing measurement in descending order of the reaction time of the analysis items for all the specimens, there is a high possibility that a certain specimen (pre-specimen) is dispensed and then a specimen (post-specimen) different from the pre-specimen is dispensed frequently. As a result, the pre-specimen attached to the first nozzle is likely to be mixed with the post-specimen, which increases the possibility of causing carryover. In particular, in a case of an automatic analyzer that shares reagents and specimens on the common disk 3, reagents or specimens cannot be added until the analysis operation of all specimens is completed, and thus, when the completion of analysis is delayed, the addition of reagents or specimens to be used in the next analysis will be delayed, and analysis efficiency will decrease.

Therefore, in the following, an embodiment related to an automatic analyzer that can further reduce carryover, in particular, an automatic analyzer that can achieve both reduction of carryover between specimens and shortening of analysis time by using different specimen dispensing units for different analysis items will be described. Furthermore, in the following, there is a description that the program is the control main body in some cases, but it is needless to say that this means that the control unit 31 reads the program from the storage unit 32 and executes the program.

### (Example 1)

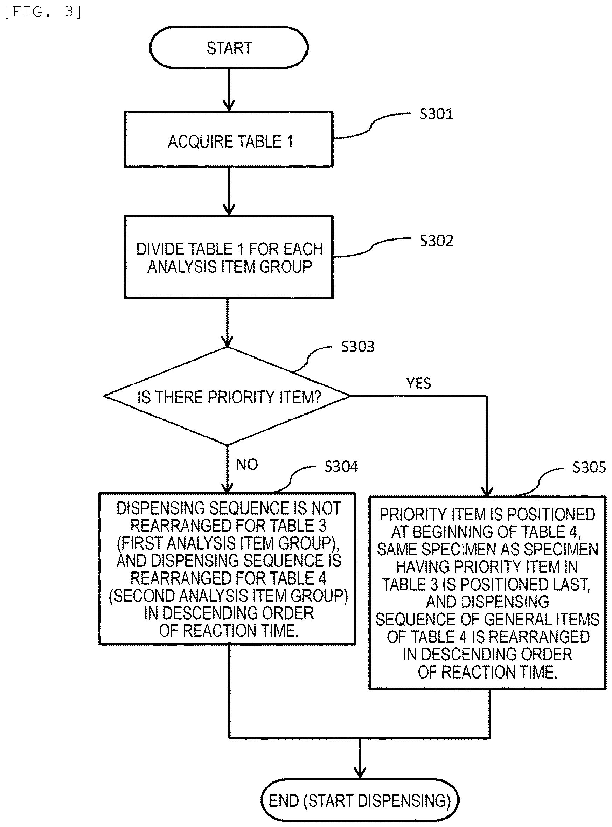

Fig. 3 is a flowchart for determining the dispensing sequence. The flowchart shows a flow after the user registers the parameters required for analysis in the storage unit 32 in advance via the input unit 33, sets the specimen and the reagent, and gives an analysis start instruction (presses the analysis start button).

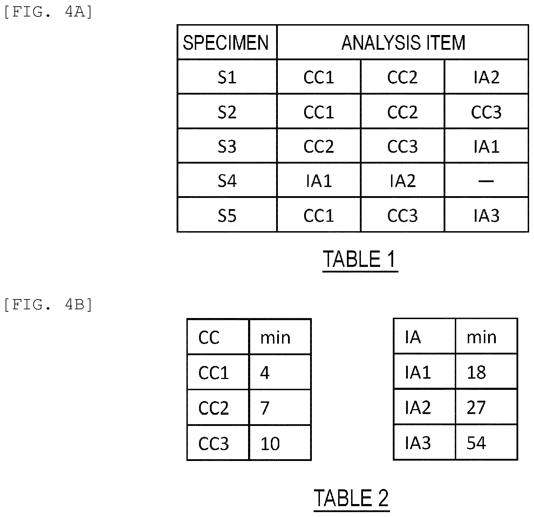

First, the control unit 31 acquires information (hereinafter, referred to as analysis information) necessary for analyzing the target component contained in the specimen. More specifically, a table (hereinafter, referred to as Table 1) in which the types of the specimen shown in Fig. 4A and the analysis items for the specimen are associated with each other is acquired (S301). Table 1 is associated with a table (hereinafter, referred to as Table 2) in which each analysis item shown in Fig. 4B is associated with reaction times. The contents of Table 1 are input by the user via the input unit 33. The contents of Table 2 are stored in the storage unit 32 in advance.

A label (for example, a bar code, a two-dimensional code, or RFID) is attached to the specimen vessel 5, and the analysis items for the specimen is stored in the label. A reader (not shown) reads the analysis items from the label and transmits the analysis items to the control device 30. The control unit 31 collates the analysis items with the parameters registered by the user, and generates Table 1 based on the matching analysis items.

Next, the classification unit 35 classifies the analysis information into a first analysis item group and a second analysis item group. In other words, Table 1 is divided into each analysis item group (S302). In a case of biochemical analysis, the nozzle directly touches the reagent or specimen, and thus there is a high possibility of carryover. Meanwhile, in a case of immunoassay, since the nozzle has the tip 17 attached thereto to perform dispensing, the possibility of carryover is low. In this manner, Table 1 is divided with the analysis item group having a high possibility of carryover as the first analysis item group (biochemistry) and the analysis item group having a low possibility of carryover as the second analysis item group (immunity). In this manner, a table (hereinafter, referred to as Table 3) only for the first analysis item group and a table (hereinafter, referred to as Table 4) only for the second analysis item group are generated.

Next, the determination unit 36 determines the dispensing sequence for each specimen for the first analysis item group, and determines the dispensing sequence for each specimen for analysis item for the second analysis item group. More specifically, the determination unit 36 determines whether or not the priority item (which will be described later) is included in Table 4 (S303), and when the priority item is not included, the dispensing sequence is not rearranged for Table 3, and the dispensing sequence is rearranged in descending order of the reaction time for Table 4 (S304). Meanwhile, when the priority item is included, the determination unit 36 arranges the priority item to be positioned first in Table 4 and arranges the same specimen as the specimen having the priority item to be positioned last in Table 3, and rearranges the dispensing sequence in descending order of the reaction time of general items (which will be described later) in Table 4 (S305). When there is no specimen which is the same as the specimen having the priority item in Table 3, the dispensing sequence is not rearranged. Further, in Table 4, when a plurality of priority items are included, the dispensing sequence of the priority items is rearranged in descending order of the reaction time, after the priority items, the dispensing sequence of the general items is rearranged in descending order of the reaction time.

After S304 or S305, the control unit 31 starts dispensing related to the specimen which is the analysis request target according to the determined dispensing sequence.

Here, the priority item (also referred to as a high priority item) is one type of immunity items, and indicates an analysis item that requires particularly precise analysis among the immunity items. The general item indicates a normal immunity item (immunological analysis item that requires normal accuracy). In other words, the priority item has a higher priority than the general item.

For example, when the first nozzle accesses a specimen vessel A, there is a possibility that impurities attached to the first nozzle are mixed into the specimen vessel A. After that, when the second nozzle accesses the specimen vessel A, there is a possibility that the second nozzle aspirates the impurities. Since the first nozzle is cleaned each time dispensing is performed, this problem is trivial in a case of a general item, but it is necessary to consider even a trivial influence in a case of a priority item. Accordingly, the control unit 31 performs control to dispense the priority item first without influence of carryover.

Further, for example, there are a plurality of priority items, and it is necessary for the second nozzle to first access the specimen vessel A and then access a specimen vessel B. Here, when only the control of dispensing the priority item first is performed, a sequence in which the second nozzle accesses the specimen vessel A → the first nozzle accesses the specimen vessel A → the first nozzle accesses the specimen vessel B → the second nozzle accesses the specimen vessel B may also be adopted. Then, the impurities attached to the first nozzle that has accessed the specimen vessel A are mixed into the specimen vessel B, and then the second nozzle accesses the specimen vessel B, which affects the priority items. Accordingly, in the biochemical analysis, the control unit 31 performs control to dispense the same specimen as the specimen having the priority item lastly.

Fig. 4 is a diagram showing analysis information, Fig. 4A shows Table 1, and Fig. 4B shows Table 2. Hereinafter, the specimen is referred to as S (sample), the biochemical analysis item is referred to as CC (clinical chemistry), and the immunological analysis item is referred to as IA (immunoassay). Depending on the number of types, numbers are added next to the letters such as S1, S2 ..., CC1, CC2 ..., and IA1, IA2 .... Examples of CC include AST, GLU, CREJ, HDL-C and the like, and examples of IA include hCG STAT, CEA, TSH, Folate and the like. Here, an example of performing biochemical and immunological analysis of a total of 5 specimens is shown.

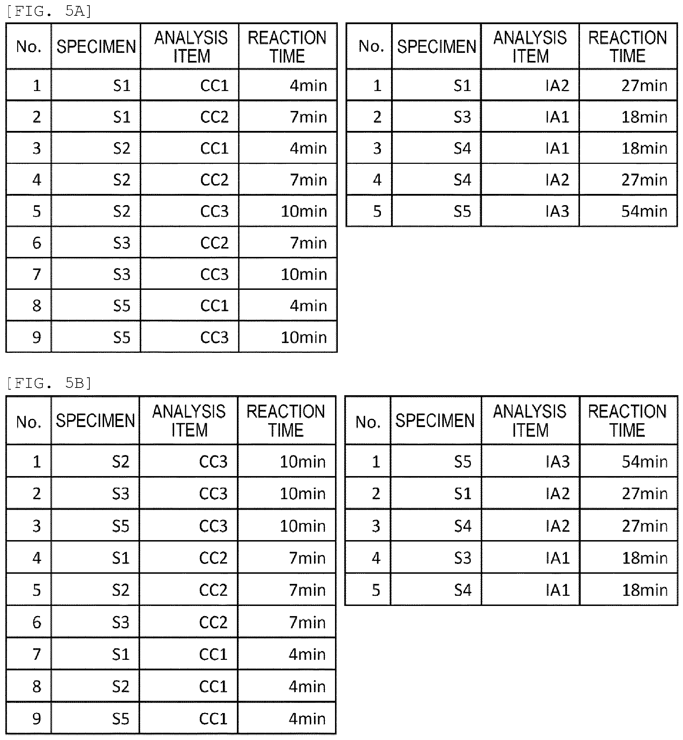

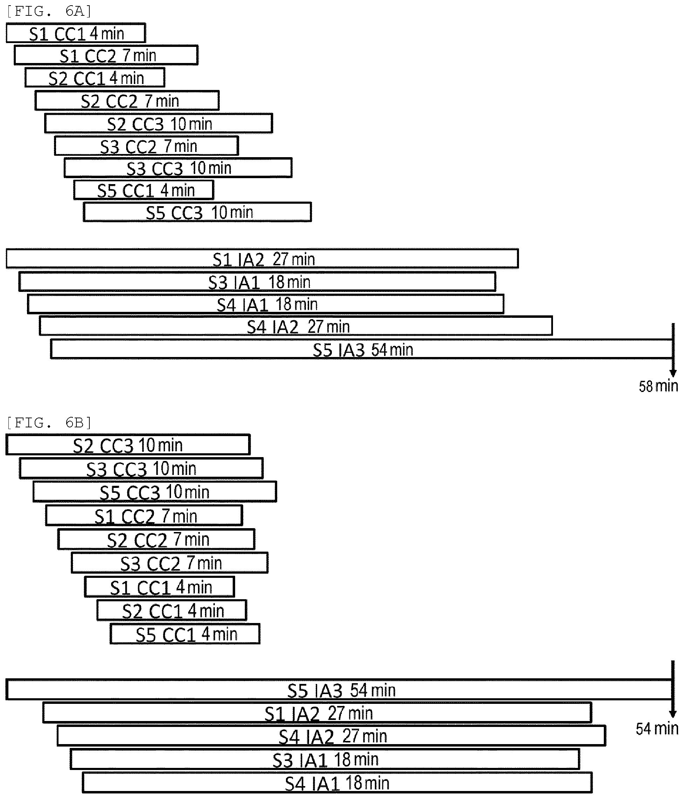

Fig. 5 is a diagram showing a dispensing sequence for describing the problem of the embodiment, Fig. 5A shows a case where dispensing according to an analysis request, and Fig. 5B shows a case where dispensing all specimens in descending order of the reaction time. Further, Fig. 6 is a timing chart for describing the problem of the embodiment, Fig. 6A corresponds to Fig. 5A, and Fig. 6B corresponds to Fig. 5B, respectively. Furthermore, the start time of the process in the timing chart is the time when the discharge to the reaction vessel 2 is first performed. Here, an example in which the discharge for biochemistry and the discharge for immunity are started at the same time is shown, but these discharge start times may be shifted. Further, in a case of biochemistry, the analysis is completed only by placing the reaction vessel 2 in the incubator 1, but in a case of immunity, the analysis is performed after moving the reaction vessel 2 from the incubator 1 to the detection unit 16. In other words, in a case of biochemistry, the analysis is completed at the time indicated on the timing chart. Meanwhile, in a case of immunity, the time indicated on the timing chart indicates the time at which the reaction is promoted on the incubator 1, and it is noted that the analysis does not end only at this indicated time.

In this example, Fig. 6B, in which analysis is performed in descending order of the reaction time, requires 4 minutes shorter analysis time than Fig. 6A, in which dispensing is performed in the sequence simply according to the analysis request. However, when paying attention to the specimen of Fig. 6B, it can be seen that the dispensing to a certain specimen and the dispensing to a different specimen are performed alternately. When repeating such dispensing, the possibility of carryover increases.

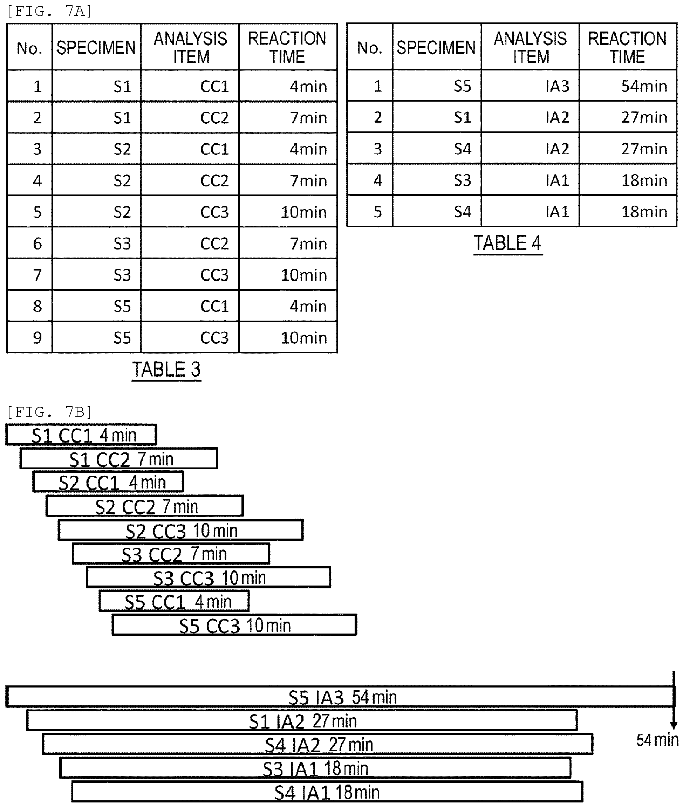

Fig. 7 is a diagram showing a process corresponding to S304 of Example 1, Fig. 7A shows a dispensing sequence, and Fig. 7B shows a timing chart. Normally, analysis requests are made for each specimen as shown in Table 1, and thus, when the dispensing sequence is not rearranged, the analysis requests are arranged for each specimen. In other words, in a case of biochemistry, by performing dispensing according to the analysis request, dispensing is performed intensively to the same specimen, and the possibility of carryover can be reduced. Meanwhile, in a case of immunity, since the influence of carryover may not be considered, the dispensing sequence may be determined for each analysis item regardless of the type of specimen. Furthermore, in immunity, the analysis time can be shortened by performing dispensing in descending order of the reaction time.

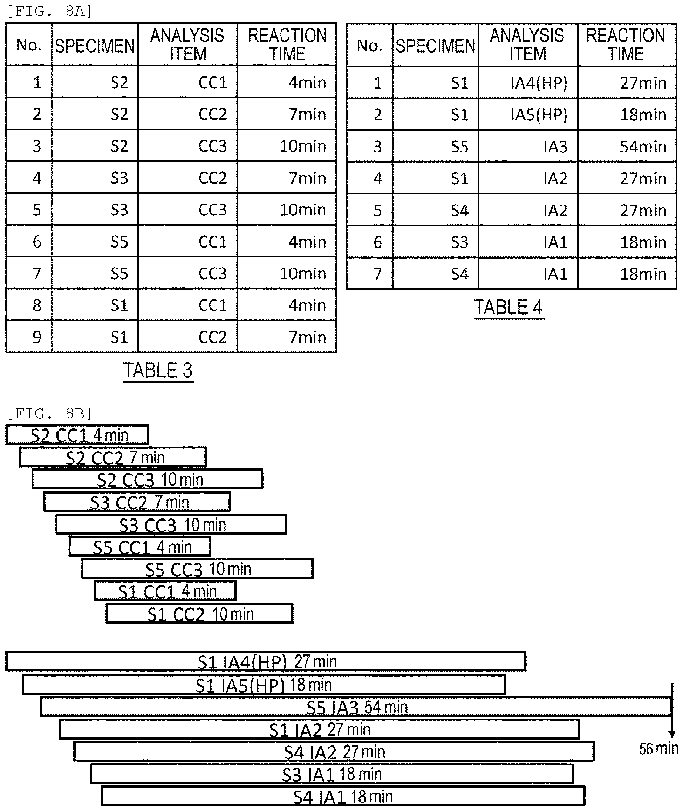

In summary, the number of times of dispensing from one specimen to another is 3 in Fig. 5A and 8 in Fig. 5B. Further, the analysis time is 58 minutes in Fig. 5A and 54 minutes in Fig. 5B. In other words, when the dispensing is performed according to the requested order, the possibility of carryover is low, but the analysis time is long. However, when all the specimens are dispensed in descending order of the reaction time, the analysis time can be shortened, but the possibility of carryover increases.

Meanwhile, in a case of Example 1, the number of times of dispensing from one specimen to another is 3, and the analysis time is 54 minutes. In other words, the number of times of dispensing from one specimen to another can be reduced by 5 as compared with a case of simply dispensing in descending order of the reaction time, and the analysis time can be reduced by 4 minutes as compared with a case of simply dispensing according to the requested order.

Fig. 8 is a diagram showing a process corresponding to S305 of Example 1, Fig. 8A shows a dispensing sequence, and Fig. 8B shows a timing chart. In Fig. 8A, the processing of the priority item (referred to as High Priority (HP)) is added before "S5 IA3 54 minutes" in Fig. 7B. Here, the reaction times of the priority items are 27 minutes and 18 minutes, the dispensing sequence in descending order of the reaction time is not achieved as a whole, and thus the analysis time is 56 minutes, which is longer than 54 minutes in Fig. 7B (Fig. 8B). However, since the priority items are dispensed in descending order of the reaction time, the influence on the overall reaction time may be small. Further, in Fig. 8A, the order of S1 is the last in Table 3. Furthermore, examples of priority items include HBsAgII, HBsAg quantII, TG, HIVcombiPT, and the like.

As described above, in Example 1, both reduction of carryover and shortening of analysis time can be realized, and carryover of a priority item can be reduced even in immunity.

### (Example 2)

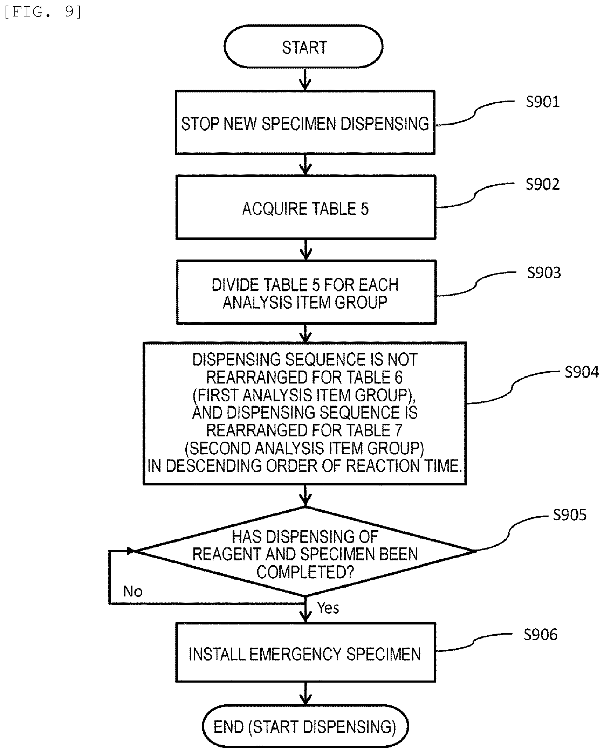

Fig. 9 is a flowchart when an emergency specimen is generated. The flowchart shows the flow after the user registers the analysis item of the emergency specimen in the storage unit 32 via the input unit 33 and gives an emergency specimen analysis start instruction (presses the emergency specimen analysis start button). Basically, in a case of an automatic analyzer that shares reagents and specimens on the common disk 3, reagents or specimens cannot be added until the analysis operation of all specimens is completed. However, in an emergency, the automatic analyzer is unavoidably stopped, and the emergency specimen can also interrupt the already determined dispensing sequence.

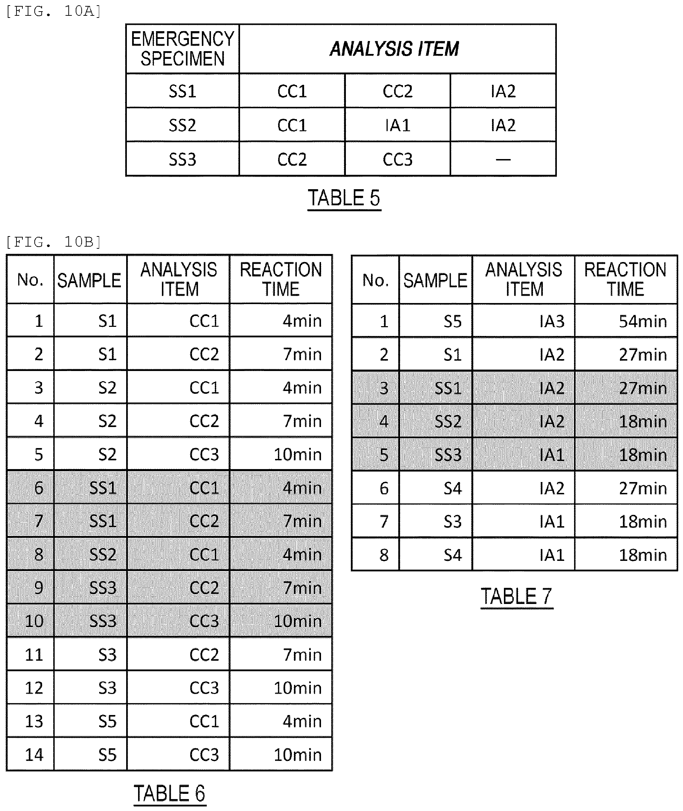

First, the control unit 31 stops the new specimen dispensing (S901), and as in Fig. 3, acquires a table (hereinafter, referred to as Table 5) related to the analysis request of the emergency specimen shown in Fig. 10A (S902). The classification unit 35 divides Table 5 into a table (hereinafter, referred to as Table 6) in which the first analysis item group is the only analysis item group and a table (hereinafter, referred to as Table 7) in which the second analysis item group is the only analysis item group (S903). Then, the determination unit 36 does not rearrange the dispensing sequence for Table 6, and rearranges the dispensing sequence in descending order of the reaction time for Table 7 (S904).

After that, the control unit 31 determines whether or not the dispensing of the reagents and the specimens has been completed (S905). Here, it is determined whether or not there are reagents and specimens in the middle of dispensing. When there are reagents and specimens, the process is repeated, and when there are no reagents and specimens, the common disk 3 is stopped and the process proceeds to the emergency specimen installation (S906). Then, when the installation of the emergency specimen on the common disk 3 is completed, the control unit 31 starts dispensing related to the emergency specimen according to the determined dispensing sequence.

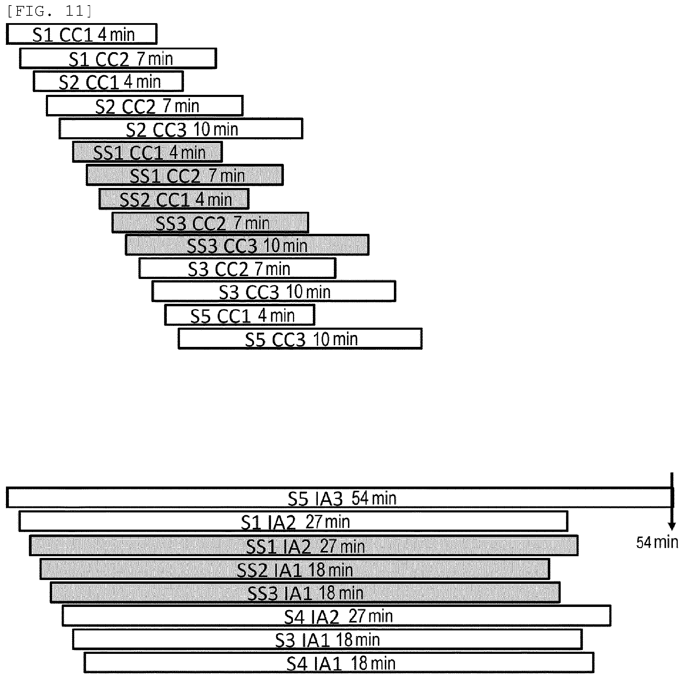

Figs. 10 is a diagram showing analysis information when an emergency specimen is generated, Fig. 10A shows Table 5 in which the types of emergency specimens and analysis items are associated with each other, and Fig. 10B shows the analysis sequence of Example 2. Further, Fig. 11 is a timing chart corresponding to Fig. 10B.

Here, a case is shown in which interruption of 3 specimens, which are emergency specimens, occurs 2 minutes after the start of dispensing. For example, when the emergency specimen analysis button is pressed during the analysis of No. 5 of Table 3 and No. 2 of Table 4, the interruption of the emergency specimens No. 6 to 10 and No. 3 to 5 occurs between No. 5 and No. 6 in Table 3 and between No. 2 and No. 3 in Table 4, respectively. As shown in Fig. 11, even when an emergency specimen is generated, both reduction of carryover and shortening of analysis time can be achieved.

Furthermore, when the emergency specimen analysis button is pressed during the analysis of No. 4 of Table 3, priority is given to the emergency specimen, and the emergency specimen may be analyzed immediately after the analysis of No. 4 is completed, and from the viewpoint of preventing carryover, interruption of the emergency specimen may occur after waiting for the completion of the analysis of No. 5.

### (Example 3)

In Examples 1 and 2, a case where the first analysis item group is for biochemistry and the second analysis item group is for immunity was described. Here, as shown in Fig. 7B, since there is a large difference between the reaction times of biochemistry and immunity, the reaction time for immunity includes the reaction time for biochemistry, and rearrangement is not necessary for the biochemistry. However, the analysis item group is not limited to biochemistry and immunity, and when the difference in reaction time between the first analysis item group with a high possibility of carryover and the second analysis item group with a low possibility of carryover is small, even in the first analysis item group, the analysis time can be further shortened by rearranging the dispensing sequence within the same specimen.

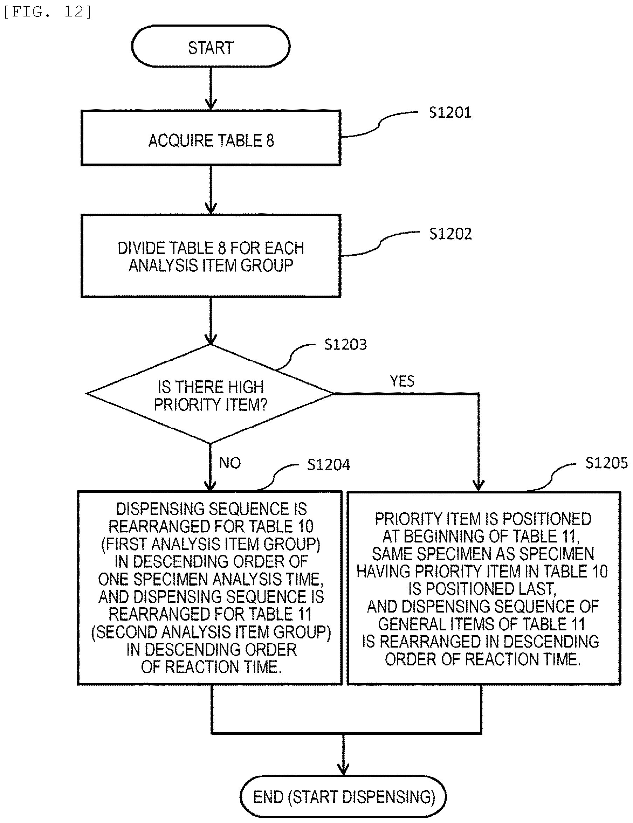

Fig. 12 is a flowchart for determining a dispensing sequence in Example 3.

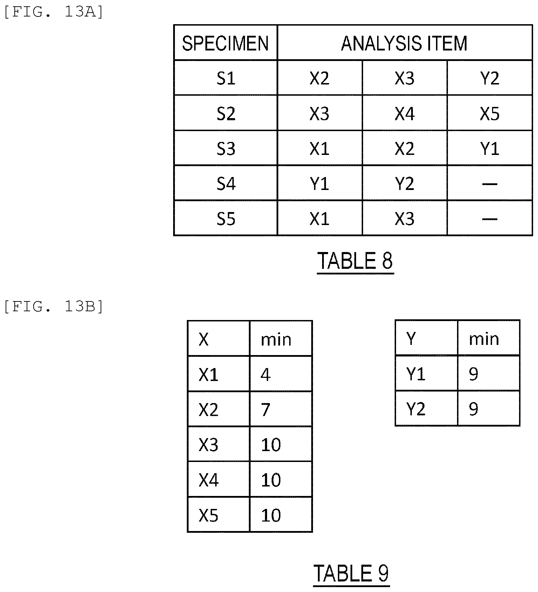

The control unit 31 acquires a table (hereinafter, referred to as Table 8) shown in Fig. 13A (S1201). Table 8 is associated with a table (hereinafter, referred to as Table 9) shown in Fig. 13B. Next, the classification unit 35 divides Table 8 into each analysis item group (S1202). In other words, a table (hereinafter, referred to as Table 10) in which the first analysis item group is the only analysis item group and a table (hereinafter, referred to as Table 11) in which the second analysis item group is the only analysis item group are generated.

Next, the determination unit 36 determines whether or not the priority item is included in Table 8 (S1203), and when the priority item is not included, the dispensing sequence is rearranged in descending order of one specimen analysis time (which will be described later) for Table 10 (S1204), and the dispensing sequence is rearranged in descending order of the reaction time for Table 11 (S1205). Furthermore, as a result of rearrangement, when there are a plurality of specimens having the same length of one specimen analysis time, an order in which the analysis is requested is adopted.

Here, the one specimen analysis time indicates the time from the start of dispensing of the first analysis item to the end of the analysis of the last analysis item in the analysis of only one certain specimen. For example, a specimen S1 has 2 analysis items of the first analysis item group, and the analysis times of each analysis item is 7 minutes and 10 minutes, respectively. Further, a specimen S2 has 3 analysis items of the first analysis item group, and the analysis time of all 3 analysis items is 10 minutes. Then, there is a deviation of 20 seconds in the analysis start time for each analysis item. In this case, in S1, the analysis item of 10 minutes is started first, and the analysis item of 7 minutes is started 20 seconds later, but the analysis time of S1 as a whole is only 10 minutes. Meanwhile, in S2, the analysis time of all the analysis items is 10 minutes, and thus, when the dispensing is started with the time shifted by 20 seconds each, the analysis time as S2 becomes 10 minutes and 40 seconds. In other words, when comparing the one specimen analysis times of S1 and S2 with each other, S2 is longer. Accordingly, in the first analysis item group, S2, in which one specimen analysis time is long, may be dispensed before S1.

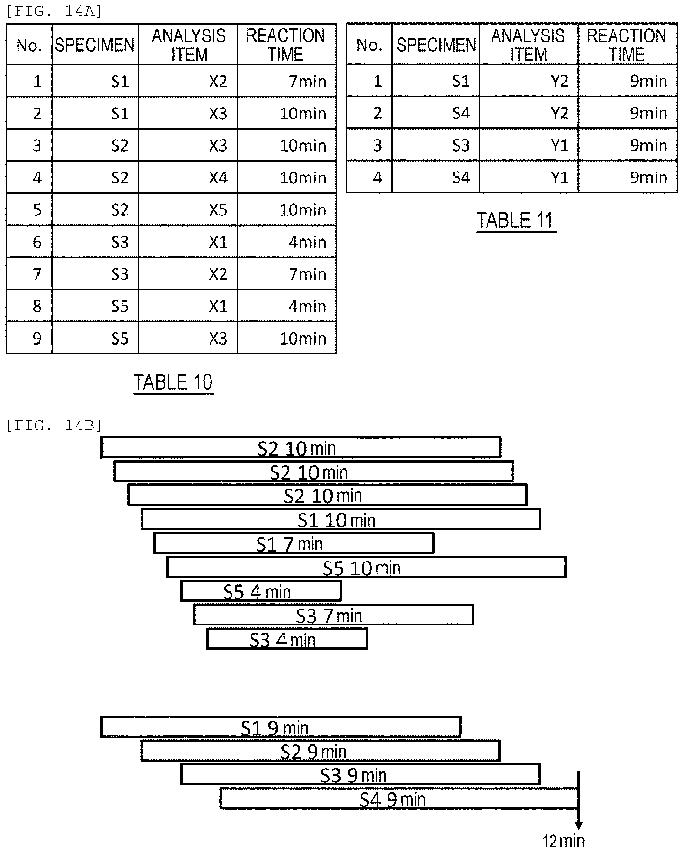

Fig. 14 is a timing chart in Example 3, Fig. 14A shows an example in which the analysis sequence is rearranged only for the second analysis item group, and Fig. 14B shows an example in which the dispensing sequence is rearranged for the first analysis item group based on one specimen analysis time. Here, the analysis item of the first analysis item group is referred to as X, and the analysis item of the second analysis item group is referred to as Y. Depending on the number of types, numbers are added next to the letters such as X1, X2 ..., and Y1, Y2 .... In this manner, by adjusting the dispensing sequence in the first analysis item group, it is possible to shorten the overall analysis time while reducing the carryover.

According to the above-described embodiments, in the automatic analyzer including the first dispensing unit for dispensing the specimen related to the first analysis item group having a high possibility of carryover and the second dispensing unit for dispensing the specimen related to the second analysis item group having a low possibility of carryover, the dispensing sequence is determined for each specimen for the first analysis item group, and the dispensing sequence is determined for each analysis item for the second analysis item group. Therefore, the carryover can be reduced more reliably than in the technology of the related art in which the dispensing sequence is determined only for each specimen. Further, for the second analysis item group, when the dispensing sequence is determined in descending order of the reaction time, both reduction of carryover and shortening of overall analysis time can be achieved.

### Reference Signs List

- 100:: automatic analyzer
- 1:: incubator
- 2:: reaction vessel
- 3:: common disk
- 4:: reagent vessel
- 5:: specimen vessel
- 6:: reagent aspiration position
- 7:: specimen aspiration position
- 8:: first dispensing unit
- 9:: second dispensing unit
- 10:: first pump
- 11:: second pump
- 12:: first cleaning tank
- 13:: second cleaning tank
- 14:: reagent agitating unit
- 15:: spectrophotometer
- 16:: detection unit
- 17:: tip
- 18:: transport unit
- 19, 20:: tray
- 21:: disposal box
- 22:: tip mounting position
- 23:: tip disposal position
- 24:: waste tank
- 25, 26:: water supply tank
- 27:: cleaning liquid container
- 30:: control device

## Claims

1. An automatic analyzer comprising:
a first dispensing unit (8) for dispensing a specimen related to a first analysis item group having a high possibility of carryover,
a second dispensing unit (9) for dispensing a specimen related to a second analysis item group having a low possibility of carryover,
an input unit (33) for receiving an input of analysis information related to a plurality of analysis items of the specimen,
a classification unit (35) for classifying the analysis information into the first analysis item group and the second analysis item group, and
a determination unit (36) for determining a dispensing sequence for each specimen for the first analysis item group and determining a dispensing sequence for each analysis item for the second analysis item group.

2. The automatic analyzer according to claim 1, wherein when the second analysis item group does not include a priority item having a higher priority than a general item that requires normal accuracy, the determination unit (36) sets a dispensing sequence of the analysis items included in the first analysis item group to the dispensing sequence as described in the analysis information.

3. The automatic analyzer according to claim 2, wherein when the second analysis item group does not include the priority item, the determination unit (36) rearranges the dispensing sequence of the analysis items included in the second analysis item group in descending order of the reaction time.

4. The automatic analyzer according to claim 1, wherein when the second analysis item group includes a priority item having a higher priority than a general item that requires normal accuracy, the determination unit (36) arranges the dispensing sequence of the priority item to be positioned first in the second analysis item group and arranges the dispensing sequence of the same specimen as the specimen included in the first analysis item group and including the priority item to be positioned last in the first analysis item group.

5. The automatic analyzer according to claim 4, wherein when the second analysis item group includes a plurality of the priority items, the determination unit (36) sets a dispensing sequence of the plurality of the priority items to be in descending order of the reaction time, and sets, after the plurality of the priority items, a dispensing sequence of the general items to be in descending order of the reaction time.

6. The automatic analyzer according to claim 1, wherein when the input unit (33) receives an input of information related to an emergency specimen, the determination unit (36) determines a dispensing sequence so as to start the analysis of the emergency specimen after the analysis of the specimen currently being analyzed is completed.

7. The automatic analyzer according to claim 1, wherein the determination unit (36) sets a dispensing sequence in the first analysis item group to be in descending order of one specimen analysis time.

8. The automatic analyzer according to claim 1, further comprising:
a common disk (3) for holding a reagent vessel (4) that stores a reagent and a specimen vessel that stores a specimen in common.

9. An automatic analyzer comprising:
an input unit (33) for inputting analysis information related to a plurality of analysis items for a specimen;
a classification unit (35) for classifying the analysis information into a first analysis item group having a high possibility of carryover and a second analysis item group having a low possibility of carryover; and
a determination unit (36) for determining a dispensing sequence for each specimen for the first analysis item group, and determining a dispensing sequence for the second analysis item group to be in descending order of the reaction time.

10. The automatic analyzer according to claim 9, wherein when the second analysis item group does not include a priority item having a higher priority than a general item that requires normal accuracy, the determination unit (36) sets a dispensing sequence of the analysis items included in the first analysis item group to the dispensing sequence as described in the analysis information.

11. The automatic analyzer according to claim 9, wherein when the second analysis item group includes a priority item having a higher priority than a general item that requires normal accuracy, the determination unit (36) arranges the dispensing sequence of the priority item to be positioned first in the second analysis item group, and arranges the dispensing sequence of the same specimen as the specimen included in the first analysis item group and including the priority item to be positioned last in the first analysis item group.

12. The automatic analyzer according to claim 11, wherein when the second analysis item group includes a plurality of the priority items, the determination unit (36) sets a dispensing sequence of the plurality of the priority items to be in descending order of the reaction time, and sets, after the plurality of the priority items, a dispensing sequence of the general items to be in descending order of the reaction time.

13. The automatic analyzer according to claim 9, wherein when the input unit (33) receives an input of information related to an emergency specimen, the determination unit (36) determines a dispensing sequence so as to start the analysis of the emergency specimen after the analysis of the specimen currently being analyzed is completed.

14. The automatic analyzer according to claim 9, wherein the determination unit (36) sets a dispensing sequence in the first analysis item group to be in descending order of one specimen analysis time.

15. The automatic analyzer according to claim 9, further comprising:
a common disk (3) for holding a reagent vessel (4) that stores a reagent and a specimen vessel that stores a specimen in common.

16. The automatic analyzer according to any one of claims 1 to 15, wherein
the first analysis item group indicates an analysis item group related to biochemistry, and
the second analysis item group indicates an analysis item group related to immunity.
